# EUROPÄISCHE PATENTANMELDUNG

(11) **EP 1 116 944 A2**
(43) Veröffentlichungstag der Anmeldung: **18.07.2001**
(21) Anmeldenummer: 01100232.6
(22) Anmeldetag: 03.01.2001
(51) Int. Cl.: G01M 1/04

(54) **Vorrichtung zum Auswuchten eines Fahrzeugrades**

(30) Priorität: 10.01.2000 DE 10000683
(71) Anmelder: Schenck RoTec GmbH, 64293 Darmstadt (DE)
(72) Erfinder: Rogalla, Martin, 64297 Darmstadt (DE); Schönfeld, Harald, 64291 Darmstadt (DE)
(74) Vertreter: Haar, Lucas H., Dipl.-Ing.

(57) **Zusammenfassung**

Bei einer Vorrichtung zum Auswuchten eines Fahrzeugrades (2) mit einer Meßeinrichtung zur Bestimmung von Größe und Ausgleichsposition eines am Fahrzeugrad (2) in der jeweiligen Ausgleichsebene anzubringenden Ausgleichsgewichts und mit einer Halterung (l), in der das Fahrzeugrad (2) zum Befestigen eines Ausgleichsgewichts positionierbar ist und die aus einer ersten Stellung in eine zweite Stellung bewegbar ist, wird die Halterung (1) bei der Bewegung aus der ersten in die zweite Stellung in zwei Richtungen derart gedreht, daß das Fahrzeugrad (2) in der zweiten Stellung eine mit der Radinnenseite der Bedienungsperson zumindest teilweise zugekehrte und von der Bedienungsperson weg nach hinten zur Horizontalebene geneigte Lage einnimmt.

## Beschreibung

Die Erfindung betrifft eine Vorrichtung zum Auswuchten eines Fahrzeugrades mit einer Meßeinrichtung zur Bestimmung von Größe und Ausgleichsposition eines am Fahrzeugrad in der jeweiligen Ausgleichsebene anzubringenden Ausgleichsgewichts und mit einer Halterung, in der das Fahrzeugrad zum Befestigen eines Ausgleichsgewichts positionierbar ist und die gemeinsam mit dem Fahrzeugrad aus einer ersten Stellung in eine zweite Stellung bewegbar ist.

Eine Vorrichtung der angegebenen Art, die zum industriellen Auswuchten von Kraftfahrzeugrädern bestimmt ist, ist aus DE 196 11 574 C1 bekannt. Bei der bekannten Vorrichtung werden in einer Wuchtmaschine die Unwuchten eines Kraftfahrzeugrades in zwei Ebenen gemessen und diejenigen Stellen auf dem Kraftfahrzeugrad markiert an denen Ausgleichsgewichte anzubringen sind. Anschließend wird das Kraftfahrzeugrad mittels Förderrollen in eine Radmulde transportiert, in der es auf einer Halterung eine vertikale Position einnimmt. In dieser vertikalen Position ist das Kraftfahrzeugrad zum Einschlagen von Schlaggewichten besonders gut zugänglich. Zum Anbringen eines Klebegewichts in der Felgenschüssel des Kraftfahrzeugrades wird die Halterung der Radmulde um eine horizontale Achse durch einen maschinellen Antrieb um 90° geschwenkt, wodurch das Kraftfahrzeugrad in die horizontale Lage mit nach oben weisender Radinnenfläche gebracht wird.

Der Erfindung liegt die Aufgabe zugrunde, eine Vorrichtung der eingangs genannten Art zu schaffen, die sich gleichermaßen zur Anbringung von durch Klammern wie auch durch Klebung gehaltenen Ausgleichsgewichten eignet und die eine ergonomisch besonders günstige Anbringung insbesondere der durch Klebung gehaltene Ausgleichsgewichte ermöglicht.

Die Aufgabe wird erfindungsgemäß dadurch gelöst, daß die Halterung bei der Bewegung aus der ersten in die zweite Stellung in zwei Richtungen derart gedreht wird, daß das Fahrzeugrad in der zweiten Stellung eine mit der Radinnenseite der Bedienungsperson zumindest teilweise zugekehrte und von der Bedienungsperson weg nach hinten zur Horizontalebene geneigte Lage einnimmt.

Bei der erfindungsgemäßen Vorrichtung ist das Anschlagen der von Klammern gehaltenen Ausgleichsgewichte in üblicher Weise in der ersten Stellung der Halterung möglich, in der sich das Fahrzeugrad in einer im wesentlichen senkrecht stehenden Lage befindet. Zum Anbringen von durch Kleben gehaltenen Ausgleichsgewichten an der Innenseite der Radschüssel wird das Fahrzeugrad jedoch nicht, wie bei der bekannten Vorrichtung in eine horizontal liegende Position gebracht, sondern in eine Schräglage, in der die Radinnenseite obenliegend der Bedienungsperson zugekehrt ist. Hierdurch ist der gesamte Randbereich der Radschüssel, der für die Anbringung von Klebegewichten in Frage kommt, für die Bedienungsperson gut zugänglich und die Bedienungsperson muß sich bei der Anbringung der Klebegewichte nicht, wie bei der bekannten Vorrichtung, über das Fahrzeugrad beugen, sondern kann in bequemer, aufrechter Haltung und bei guter Sicht auf beide Ausgleichs- bzw. Befestigungsebenen die Ausgleichsgewichte in beiden Ausgleichsebenen anbringen. Günstig ist hierbei, daß das Aufkleben der Ausgleichsgewichte im unteren Bereich der Felgeninnenfläche erfolgen kann, da dieser Bereich am besten zugänglich und einzusehen ist. Um zu erreichen, daß sich die Bedienungsperson hierbei nicht bücken muß, kann nach einem weiteren Vorschlag der Erfindung vorgesehen sein, daß die Halterung bei der Drehung von der ersten in die zweite Stellung angehoben wird. Unter der zweiten Stellung wird hierbei die Stellung verstanden, in der die Lage des Fahrzeugrades für die Befestigung von Ausgleichgewichten an der Felgeninnenfläche besonders vorteilhaft ist. Das Ausmaß der Drehung der Halterung ist anhand ergonomischer Kriterien frei wählbar. Die zweite Stellung kann daher an die jeweiligen Gegebenheiten angepaßt werden.

Erfindungsgemäß kann die Halterung bei der Bewegung von der ersten in die zweite Stellung um eine horizontale und zugleich um eine vertikale Achse gedreht werden. Durch einen derartigen Bewegungsablauf wird das Fahrzeugrad nicht um seine eigene Achse gedreht. Es ist daher nicht zu befürchten, daß sich das Fahrzeugrad, wenn es bereits vorher in die Ausgleichswinkellage gedreht wurde, bei der Bewegung in die zweite Stellung verdreht. Nach einem weiteren Vorschlag der Erfindung kann die Drehung der Halterung auch um eine zur Horizontalebene geneigte, raumfeste Achse erfolgen. Vorzugsweise liegt hierbei die raumfeste Achse in einer zur Ebene des Fahrzeugrades in der ersten Stellung der Halterung senkrechten Vertikalebene oder in einer zur Ebene des Fahrzeugrades in der ersten Stellung der Halterung parallel oder in einem Winkel angeordneten Vertikalebene.

Zur Erzeugung der erfindungsgemäßen Drehbewegung kann die Halterung an einem räumlichen Gelenkgetriebe angebracht sein, dessen Glieder um ein Drehgelenk mit vertikaler Achse und um ein Drehgelenk mit horizontaler Achse drehbar sind. Für die Drehung beider Glieder kann jeweils ein separater Antrieb vorgesehen sein. Nach einem anderen Vorschlag der Erfindung kann auch vorgesehen sein, daß die Zahl der Bewegungsfreiheitsgrade des räumlichen Gelenkgetriebes auf eins reduziert ist, so daß zur Bewegung der Antrieb nur eines Gliedes erforderlich ist. Auf einfache Weise kann dies dadurch erreicht werden, daß eines der Glieder durch ein Kugelgelenk mit einem weiteren Glied verbunden ist, das in einem zweiten raumfesten Kugelgelenk schwenkbar gelagert ist . So kann nur das um die vertikale Achse drehbare Glied mit Hilfe eines Antriebs drehbar und das um die horizontale Achse drehbare Glied durch ein Kugelgelenk mit dem weiteren in einem zweiten raumfesten Kugelgelenk schwenkbar gelagerten Glied verbunden sein. Diese Ausgestaltung hat den Vorteil, daß zur Drehung der Halterung um zwei Achsen nur ein einziger Antrieb erforderlich ist und dementsprechend die Vorrichtung besonders kostengünstig hergestellt werden kann.

Die Erfindung wird nachfolgend anhand von Ausführungsbeispielen näher erläutert, die in der Zeichnung dargestellt sind. Es zeigen
- Figur 1: eine um eine vertikale und eine horizontale Achse drehbare Halterung einer erfindungsgemäßen Vorrichtung in der ersten Stellung,
- Figur 2: die Halterung gemäß Figur 1 in einer Zwischenstellung zwischen der ersten Stellung und der zweiten Stellung,
- Figur 3: die Halterung gemäß Figur 1 in der zweiten Stellung und
- Figur 4: eine um eine zur Horizontalebene geneigte Achse drehbare Halterung einer erfindungsgemäßen Vorrichtung.

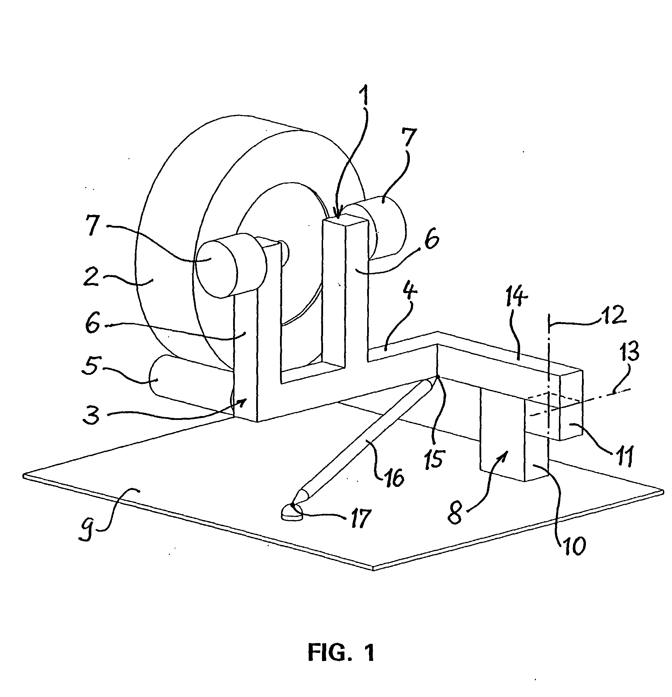

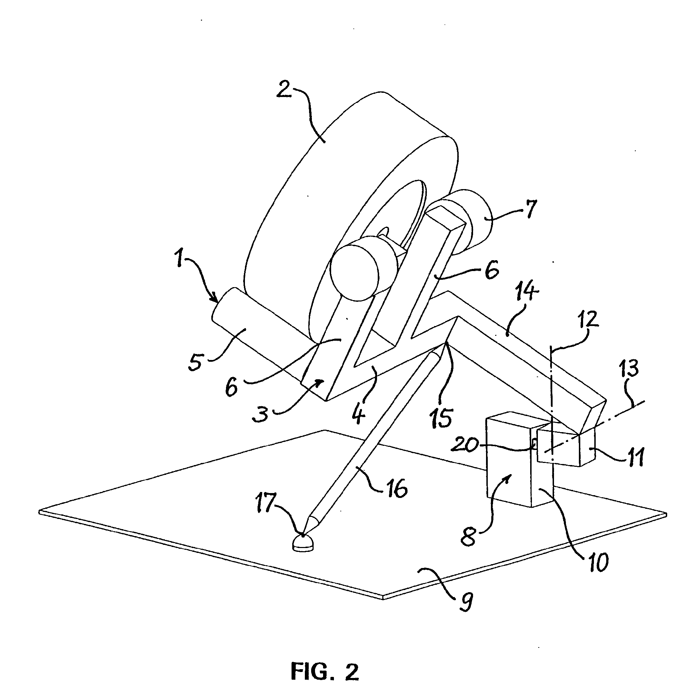

Die in den Figuren 1 bis 3 dargestellte Halterung 1 ist zur Aufnahme und Lagerung eines Fahrzeugrades 2 bestimmt, dessen Unwucht zuvor bereits in einer Meßeinrichtung nach Größe und Ausgleichsposition bestimmt worden ist und an welchem nun von Hand Ausgleichsgewichte zu befestigen sind. Die Halterung weist einen rechteckigen, oben offenen Rahmen 3 auf, der in der in Figur 1 gezeigten ersten Stellung vertikal ausgerichtet ist. Auf der in der Darstellung linken Seite sind an dem horizontalen Schenkel 4 des Rahmens 3 im Abstand voneinander zwei Rollen 5 angebracht, auf denen das Fahrzeugrad 2 mit seiner Umfangsfläche drehbar gelagert ist. An den oberen, freien Enden der vertikalen Schenkel 6 des Rahmens 3 befinden sich zwei weitere Rollen 7, die zur seitlichen Lagerung des Fahrzeugrades 2 dienen, wenn die Halterung 1 in ihre schräge zweite Stellung geschwenkt wird.

Die Halterung 1 ist an einem viergliedrigen, räumlichen Gelenkgetriebe 8 befestigt, das auf einem Gestell 9 angeordnet ist. Das Gelenkgetriebe 8 weist ein erstes auf dem Gestell 9 befestigtes Glied 10 auf, an dem ein zweites Glied 11 durch ein Drehgelenk mit vertikaler Drehachse 12 gelagert ist. In einem Abstand von der vertikalen Drehachse 12 ist das Glied 11 durch ein Drehgelenk mit horizontaler Drehachse 13 mit einem dritten Glied 14 verbunden. In Abweichung von der dargestellten Anordnung können die vertikale Drehachse 12 und die horizontale Drehachse 13 auch gegeneinander vertauscht sein. Weiterhin können die beiden Drehachsen 12, 13 sich auch kreuzen, was die Verwendung eines Kreuzgelenks erlauben würde. Das von der horizontalen Drehachse 13 entfernte Ende des dritten Gliedes 14 ist durch ein Kugelgelenk 15 mit einem vierten Glied 16 und durch eine starre Verbindung mit dem horizontalen Schenkel 4 des Rahmens 3 verbunden. Der Schenkel 4 und das Glied 14 sind rechtwinklig zueinander angeordnet und in der in Figur 1 gezeigten ersten Stellung der Halterung 1 ist das Glied 14 horizontal angeordnet, wobei es auf dem Glied 10 aufliegt. Die Länge des Gliedes 14 ist so groß bemessen, daß das Kugelgelenk 15 und das Befestigungsende des Schenkels 4 sich in einem Abstand von der vertikalen Drehachse 12 befinden. Das dem Kugelgelenk 15 entgegengesetzte Ende des Gliedes 16 ist mit einem Kugelgelenk 17 an dem Gestell 9 befestigt. Das Kugelgelenk 17 befindet sich in einer Horizontalebene, die unterhalb des Kugelgelenks 15 und in einem Abstand von diesem angeordnet ist. Die Befestigungsstelle des Kugelgelenks 17 ist ferner so gewählt, daß die durch die Drehpunkte beider Kugelgelenke bestimmte vertikale Ebene den von dem Schenkel 4 und dem Glied 14 gebildeten rechten Winkel in zwei beispielsweise etwa gleich große Abschnitte teilt. Die Position der Kugelgelenke 15 und 17 ist nicht auf die dargestellte Anordnung beschränkt, sondern in weiten Grenzen frei wählbar. Wichtig ist, daß sich eine gleichmäßige Bewegungsfolge ergibt und daß das Kugelgelenk 17 die Bedienungsperson nicht behindert.

Die Bewegung des Gelenkgetriebes 8 erfolgt durch einen in dem Glied 10 angeordneten Drehantrieb, der aus einem Antriebsmotor, einem auf der Motorwelle angeordneten Zahnrad und einer von dem Zahnrad angetriebenen Zahnstange 20 besteht, die in einem Abstand von der vertikalen Drehachse 12 durch ein zu dieser paralleles Drehgelenk mit dem Glied 11 verbunden ist. Durch Drehung des Motors in die eine oder andere Richtung wird die Zahnstange 20 aus dem Glied 10 herausgedrückt oder in das Glied 10 hineingezogen.

In der in Figur 1 gezeigten ersten Stellung der Halterung 1 befindet sich das Fahrzeugrad 2 in vertikaler Lage, in der durch Klammern gehaltene Ausgleichsgewichte am besten am Felgenrand angeschlagen werden können. Hierbei wird das Fahrzeugrad 2 auf den Rollen 5 jeweils in eine Position gedreht, in der sich die Ausgleichsposition für die Anbringung des Ausgleichsgewichts oben befindet.

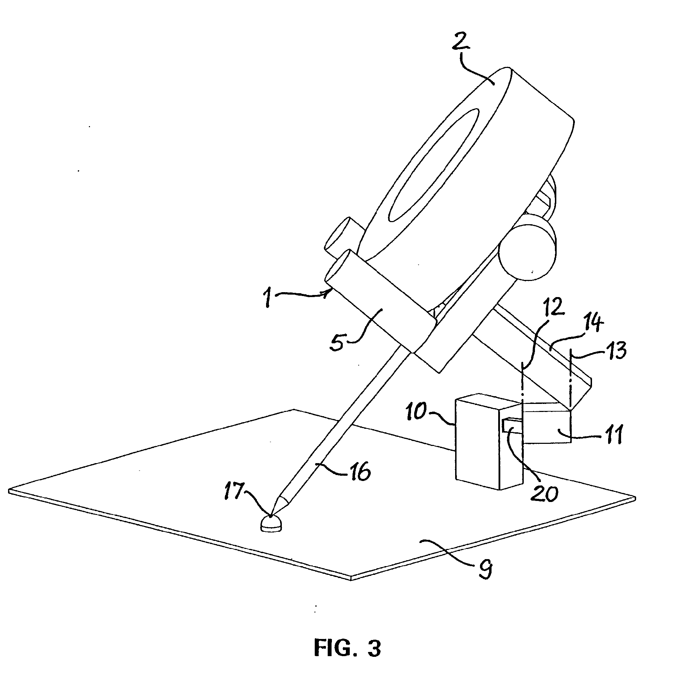

Soll ein Ausgleichsgewicht auf der Innenseite der Felgenschüssel angeklebt werden, so kann durch eine Drehung des Gliedes 11 entgegen dem Uhrzeigersinn um die vertikale Drehachse 12 mit Hilfe des Drehantriebs die Halterung 1 zusammen mit dem darauf befindlichen Fahrzeugrad 2 in eine in Figur 3 gezeigte zweite Stellung bewegt werden, in der das Fahrzeugrad 2 angehoben, schräg nach hinten geneigt und mit seiner Innenseite einer Bedienungsperson zugekehrt ist. Die Lageänderung der Haltung 1 wird hierbei von dem horizontalen Drehwinkel des Gliedes 11 und dem durch Aufrichten des Gliedes 16 erzeugten vertikalen Drehwinkel des Gliedes 14 bestimmt. Beide Drehwinkel können je nach Bedarf so eingestellt werden, daß das Fahrzeugrad 2 in der zweiten Stellung eine zum Ankleben eines Ausgleichsgewichts besonders günstige Lage einnimmt. Zur Änderung des vertikalen Drehwinkels des Gliedes 14 kann beispielsweise die Länge des Gliedes 14 und/oder des Gliedes 16 und/oder die Position des Kugelgelenks 17 an dem Gestell 9 verstellbar sein.

Das Ankleben des Ausgleichsgewichts ist in der zweiten Stellung der Halterung 1 besonders einfach, wenn das Fahrzeugrad 2 so gedreht wird, daß die Ausgleichsposition an der Innenseite der Felge sich unten befindet. Diese Stelle kann von der Bedienungsperson besonders gut eingesehen und erreicht werden.

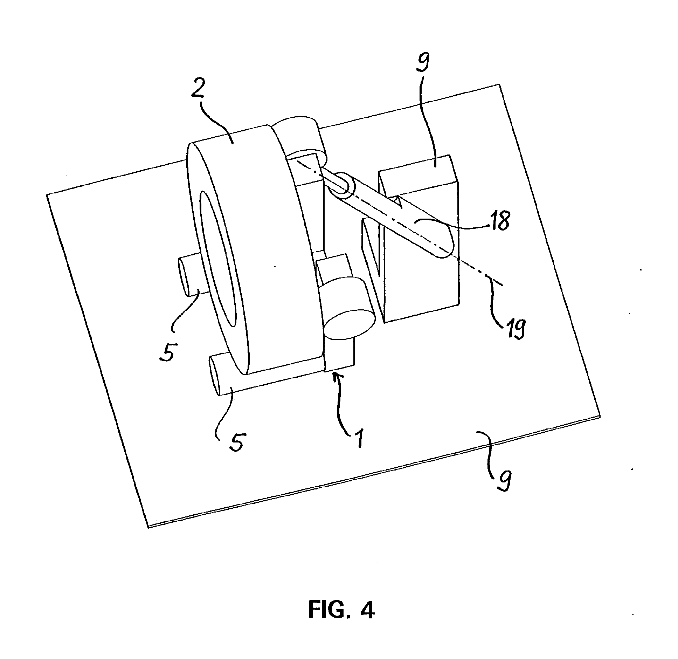

Bei dem in Figur 4 gezeigten Ausführungsbeispiel ist die Halterung 1 in einem an dem Gestell 9 befestigten Drehlager 18 gelagert, dessen Drehachse 19 in einer Ebene liegt, die senkrecht zur Rotationsebene des Fahrzeugrades in der gezeigten ersten Stellung der Halterung 1 liegt und zur Horizontalebene nach hinten geneigt ist. Die Drehachse 19 ist etwa in einem Winkel von 45° zur Horizontalen geneigt. In der in Figur 4 gezeigten ersten Stellung der Halterung 1 sind die Drehachsen der Rollen 5 horizontal und parallel zur durch die Drehachse 19 bestimmten vertikalen Ebene ausgerichtet. Das Fahrzeugrad 2 befindet sich in der zum Anschlagen von Ausgleichsgewichten geeigneten vertikalen Lage. Wird die Halterung 1 in dem Drehlager 18, von oben gesehen, entgegen dem Uhrzeigersinn um etwa 70° gedreht, so erhält das Fahrzeugrad 2 eine angehobene, schräg nach hinten geneigte und mit der Radinnenseite der Bedienungsperson zugekehrte Lage, in der wie bei dem voran beschriebenen Ausführungsbeispiel das Ankleben von Ausgleichsgewichten an der Innenseite der Radschüssel besonders ergonomisch durchführbar ist.

Die Drehachse 19 des Drehlagers 18 kann abweichend von dem in Figur 4 gezeigten Beispiel auch andere Lagen haben und in einem anderen Winkel geneigt sein. Weiterhin kann eine durch die Drehachse 19 bestimmte Vertikalebene in Bezug auf die in Figur 4 gezeigte Stellung der Halterung 1 in jedem beliebigen Winkel zwischen 0° und 90° zur Drehachse der Rollen 5 angeordnet sein. Auch der Drehwinkel zur Drehung der Halterung 1 in die zweite Stellung kann je nach gewünschter Lage des Fahrzeugrades 2 unterschiedlich bemessen sein.

## Patentansprüche

1. Vorrichtung zum Auswuchten eines Fahrzeugrades mit einer Meßeinrichtung zur Bestimmung von Größe und Ausgleichsposition eines am Fahrzeugrad in der jeweiligen Ausgleichsebene anzubringenden Ausgleichsgewichts und mit einer Halterung, in der das Fahrzeugrad zum Befestigen eines Ausgleichsgewichts positionierbar ist und die gemeinsam mit dem Fahrzeugrad aus einer ersten Stellung in eine zweite Stellung bewegbar ist, **dadurch gekennzeichnet**, daß die Halterung (1) bei der Bewegung aus der ersten in die zweite Stellung in zwei Richtungen derart gedreht wird, daß das Fahrzeugrad (2) in der zweiten Stellung (Figur 3) eine mit der Radinnenseite der Bedienungsperson zumindest teilweise zugekehrte und von der Bedienungsperson weg nach hinten zur Horizontalebene geneigte Lage einnimmt.

2. Vorrichtung nach Anspruch 1, dadurch gekennzeichnet, daß die Halterung (1) bei der Drehung von der ersten in die zweite Stellung angehoben wird.

3. Vorrichtung nach einem der Ansprüche 1 oder 2, dadurch gekennzeichnet, daß die Halterung (1) bei der Drehung von der ersten in die zweite Stellung um eine vertikale Achse (12) und zugleich um eine horizontale Achse (13) gedreht wird

4. Vorrichtung nach einem der vorhergehenden Ansprüche, dadurch gekennzeichnet, daß die Halterung (1) an einem räumlichen Gelenkgetriebe (8) angebracht ist, dessen Glieder (10, 11, 14) um ein Drehgelenk mit vertikaler Achse (12) und um ein Drehgelenk mit horizontaler Achse (13) drehbar sind.

5. Vorrichtung nach Anspruch 4, dadurch gekennzeichnet, daß für die Drehung beider Glieder (11, 14) jeweils ein separater Antrieb vorgesehen ist.

6. Vorrichtung nach einem der Ansprüche 4 oder 5, dadurch gekennzeichnet, daß die Zahl der Bewegungsfreiheitsgrade des räumlichen Gelenkgetriebes (8) auf eins reduziert ist.

7. Vorrichtung nach einem der Ansprüche 4 bis 6, dadurch gekennzeichnet, daß eines der Glieder (14) durch ein Kugelgelenk (15) mit einem weiteren Glied (16) verbunden ist, das in einem zweiten raumfesten Kugelgelenk (17) schwenkbar gelagert ist und daß eines der Glieder (10, 11, 14, 16) mit Hilfe eines Antriebs bewegbar ist.

8. Vorrichtung nach Anspruch 7, dadurch gekennzeichnet, daß das um die vertikale Achse (12) drehbare Glied (11) mit Hilfe eines Antriebs drehbar ist und daß das um die horizontale Achse (13) drehbare Glied (14) durch ein Kugelgelenk (15) mit dem weiteren Glied (16) verbunden ist, das in einem zweiten raumfesten Kugelgelenk (17) schwenkbar gelagert ist.

9. Vorrichtung nach einem der Ansprüche 1 und 2, dadurch gekennzeichnet, daß die Drehung der Halterung (1) um eine zur Horizontalebene geneigte, raumfeste Achse (19) erfolgt.

10. Vorrichtung nach Anspruch 9, dadurch gekennzeichnet, daß die raumfeste Achse (19) in einer zur Rotationsebene des Fahrzeugrades (2) in der ersten Stellung der Halterung (1) senkrechten Ebene liegt.

11. Vorrichtung nach Anspruch 9, dadurch gekennzeichnet, daß die raumfeste Achse (19) in einer zur Rotationsebene des Fahrzeugrades (2) in der ersten Stellung der Halterung (1) parallelen Ebene liegt.

12. Vorrichtung nach einem der vorhergehenden Ansprüche, dadurch gekennzeichnet, daß der Drehwinkel und/oder die Höhe der Anhebung der Halterung (1) bei ihrer Drehung von der ersten in die zweite Stellung einstellbar sind.
